(19) Europäisches Patentamt
European Patent Office
Office européen des brevets

(11) **EP 3 750 948 A1**

(12) **EUROPEAN PATENT APPLICATION**
published in accordance with Art. 153(4) EPC

(43) Date of publication:
**16.12.2020 Bulletin 2020/51**

(51) Int Cl.:
***C08J 5/18*** *(2006.01)*

(21) Application number: **19746704.6**

(22) Date of filing: **05.02.2019**

(86) International application number:
**PCT/JP2019/004096**

(87) International publication number:
**WO 2019/151537 (08.08.2019 Gazette 2019/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.02.2018 JP 2018018399**

(71) Applicant: **Kuraray Co., Ltd.
Kurashiki-shi, Okayama 710-0801 (JP)**

(72) Inventors:
• **ENOMOTO, Hiroki
Tainai-shi, Niigata 959-2691 (JP)**
• **KODERA, Jumpei
Tainai-shi, Niigata 959-2691 (JP)**

(74) Representative: **Müller-Boré & Partner
Patentanwälte PartG mbB
Friedenheimer Brücke 21
80639 München (DE)**

(54) **THERMOPLASTIC RESIN FILM AND METHOD FOR MANUFACTURING SAME**

(57) The present invention relates to a thermoplastic resin film including a thermoplastic resin composition containing 100 parts by mass of a thermoplastic resin and 0.5 to 5 parts by mass of an additive that is an organic compound, wherein the content of the thermoplastic resin and the additive is 70% by mass or more relative to the whole amount of the resin composition, a haze thereof is 2% or less, and the amount of the additive that is an organic compound attached onto the film surface is 0.02% by mass or less relative to the film, the thermoplastic resin film being prepared by extruding a thermoplastic resin composition in a molten state from a die; and bringing the molten thermoplastic resin composition into contact with a metal cooling roll having a surface roughness (Rz) of 0.1 to 1.0 $\mu$m.

**EP 3 750 948 A1**

**Description**

Technical Field

The present invention relates to a thermoplastic resin film and a method for producing the same.

Background Art

In films made of a thermoplastic resin, various additives have been recently blended commensurate with the background under which high functionalization is required. For example, with respect to resin products to be used outdoors, the weather resistance of a resin single body is poor, and therefore, it is generally known that an ultraviolet absorber or the like is added (see PTLs 1 and 2).

Citation List

Patent Literature

PTL 1: JP 2016-186086 A
PTL 2: JP 2016-535799 T

Summary of Invention

Technical Problem

However, there was involved such a problem that when a coating liquid, such as an ink and an easy-adhesive, is applied on a thermoplastic resin film containing a thermoplastic resin and additives, whitening is caused in a part of a coating film to be formed. Such a problem of whitening has been conventionally solved by reducing the additives; however, in that case, there was encountered such a problem that a function which is expected owing to addition of the additives, for example, ultraviolet ray shielding ability, becomes insufficient.

In view of the aforementioned problems, the present invention has been made, and an object thereof is to provide a thermoplastic resin film which is excellent in solvent resistance, functionality, and an appearance of a film roll, and a method for producing the same.

Solution to Problem

In order to solve the aforementioned problems, the present inventors made extensive and intensive investigations regarding the production method. As a result, it has been found that the whitening of the coating film is caused due to the fact that the additive that is an organic compound attached onto the surface of the thermoplastic resin film is condensed owing to an organic solvent, to form a condensate. In addition, it has been found that the whitening of the coating film is caused due to the fact that on the occasion of brining the thermoplastic resin in a molten state into contact with a metal roll to mold it in a film-like form, the additive that is an organic compound accumulated on the surface of the metal roll is attached onto the surface of the thermoplastic resin film. Then, the present inventors have further made extensive and intensive investigations, resulting in accomplishment of the present invention including the following embodiments.

[1] A thermoplastic resin film including a thermoplastic resin composition containing 100 parts by mass of a thermoplastic resin and 0.5 to 5 parts by mass of an additive that is an organic compound, wherein
the content of the thermoplastic resin and the additive is 70% by mass or more relative to the whole amount of the resin composition,
a haze thereof is 2% or less, and
the amount of the additive that is an organic compound attached onto the film surface is 0.02% by mass or less relative to the film.

[2] The thermoplastic resin film as set forth in [1], wherein the thermoplastic resin is at least one selected from the group consisting of a rigid methacrylic resin and an elastomer.

[3] The thermoplastic resin film as set forth in [2], wherein the elastomer is a (meth)acrylic elastomer.

[4] The thermoplastic resin film as set forth in [3], wherein the (meth)acrylic elastomer is a (meth)acrylic elastic body particle.

[5] The thermoplastic resin film as set forth in any of [1] to [4], wherein the additive that is an organic compound is an ultraviolet absorber.

[6] The thermoplastic resin film as set forth in any of [1] to [5], wherein a thickness thereof is 20 to 300 μm.

[7] A method for producing the thermoplastic resin film as set forth in any of [1] to [6], the method including extruding a thermoplastic resin composition in a molten state from a die; and

bringing the molten thermoplastic resin composition into contact with a metal roll having a surface roughness (Rz) of 0.05 to 1.5 μm,

the thermoplastic resin composition containing 100 parts by mass of a thermoplastic resin and 0.5 to 5 parts by mass of an additive that is an organic compound, and the content of the thermoplastic resin and the additive being 70% by mass or more relative to the whole amount of the resin composition.

Advantageous Effects of Invention

In accordance with the present invention, there is brought such an excellent effect that a thermoplastic resin film which is excellent in solvent resistance, functionality, and an appearance of a film roll, and a method for producing the same can be provided.

Brief Description of Drawings

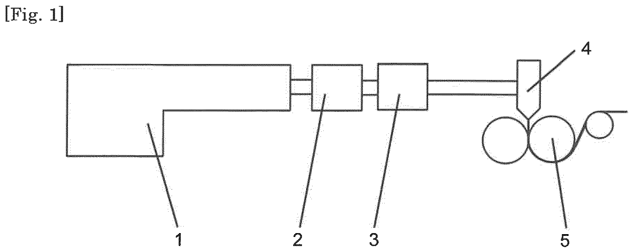

Fig. 1 is a diagrammatic view illustrating an example of a constitution of film production of the present invention.

Description of Embodiments

A constitution in the film production of the present invention is described as an example by reference to Fig. 1.

A thermoplastic resin is first melted in an extruder 1; the molten resin is passed through a gear pump 2 and then through a motionless mixing device (static mixer) 3, followed by ejection in a sheet form from a die 4; and the sheet is brought into contact with a cooling roll 5 and molded in a desired thickness. Thereafter, the film is wound up in a roll form.

The present invention is hereunder described in order.

<Extruder>

The extruder which is used in the present invention is not particularly limited, and various extruders can be used. For example, a single-screw extruder, a twin-screw extruder, or a multi-screw extruder can be used. In order to remove a volatile component generated on the occasion of melt kneading, it is preferred to equip the extruder with a vent mechanism. As the screw, in addition to a full flight type screw, a barrier flight type screw and a screw with a mixing section can be used as well. Although L/D of the screw (L represents a cylinder length of the extruder, and D represents a cylinder bore of the extruder) is not particularly limited, in order to provide a sufficient plasticized or kneaded state, it is preferably 10 or more and 100 or less, more preferably 20 or more and 50 or less, and still more preferably 25 or more and 40 or less. When the L/D is less than 10, the sufficient plasticized or kneaded state is hardly provided, whereas when it is more than 100, excessive shear heating is applied to the resin, so that the resin is possibly decomposed.

A cylinder temperature of the extruder is preferably 150°C or higher and 310°C or lower, and more preferably 180°C or higher and 280°C or lower. When the cylinder temperature is 150°C or higher, the resin can be thoroughly melted, and generation of an unmelted foreign matter and an increase of rotating torque of the screw can be suppressed, whereas when it is 310°C or lower, thermal degradation of the resin can be suppressed, and generation of a foreign matter owing to scorch or gelation and coloration of the resin can be suppressed.

<Gear Pump>

The thermoplastic resin melted by the extruder is fed into a gear pump for the purpose of suppressing pulsation of the extruder. The gear pump regulates the discharge amount commensurate with the amount of the molten resin to be fed from the extruder.

<Static Mixer>

As the motionless mixing device, a static mixer having a structure in which a number of right elements prepared by torsion bending of a rectangular plate at 180° in the right direction and left elements prepared by torsion bending of a rectangular plate at 180° in the left direction are alternately arranged within a pipe can be used. When passing through the respective elements of the static mixer, actions of division, change, and reverse are generated, thereby enabling one to expect much more effects of equalization of temperature of the molten resin and equalization of the resin.

<Die>

The die is not particularly limited, and conventionally known dies can be used, and for example, a T-die, such as a manifold die, a fishtail die, and a coat-hanger die, is preferably used. In order to stabilize the thickness, an automatic adjusting die of measuring the thickness of the formed film and automatically adjusting a bolt of the lip opening is preferred.
The lip opening during the operation is preferably 0.1 to 1.5 mm from the viewpoint of thickness precision. When the lip opening is more than 1.5 mm, a drawdown ratio [= (lip opening)/(thickness)] becomes large, and thickness unevenness of an end part is generated. On the other hand, where the lip opening is less than 0.1 mm, a back pressure within the extruder increases and exceeds a withstand pressure performance of the equipment.

<Molding Means>

The sheet-formed molten resin which has been extruded from the die is brought into close contact with a cooling roll by a close-contact auxiliary means and molded. Examples of the close-contact auxiliary device include an electrostatic close-contact device, an air knife, an air chamber, a vacuum chamber, and a touch roll. In addition, as the touch roll, a rubber roll, a metal rigid roll, and a metal elastic roll can be used. Among them, from the viewpoint of close contact properties with the roll, it is preferred to use a metal elastic roll as the close-contact auxiliary device.

<Metal Elastic Roll>

The metal elastic roll refers to a metal roll which is constituted of a double cylinder provided with a shaft member having a roll end plate; an elastic outer cylinder made of a thin-walled metal in which both end sides thereof are installed in the shaft member via the roll end plate; and a metal inner cylinder coaxially accommodated within the thin-walled metal outer cylinder while providing a fluid flowing space of a cooling fluid at a space from the thin-walled metal outer cylinder, and in which the cooling fluid is circulated into the fluid flowing space. The elastic outer cylinder as referred to herein refers to an outer cylinder, the surface of which is elastically deformed commensurate with the resin pressure. When a metal elastic roll is used for the roll, elasticity and rigidity relative to thin-walled products can be optimized, and therefore, it becomes possible to provide a high-quality film appearance.

<Cooling Roll>

As the cooling roll which is used in the present invention, a rubber roll, a metal rigid roll, and a metal elastic roll can be used. Among them, a metal rigid roll is preferred as the cooling roll to be used from the viewpoint of uniformity of physical properties within the plane of film and film thickness precision.
The metal rigid roll as referred to herein refers to a metal roll having a shaft member having a roll end plate; and a rigid outer cylinder made of a thick-walled metal in an outer periphery in which both end sides thereof are installed in the shaft member via the roll end plate, an inner periphery thereof being provided with a cooling space through which a cooling fluid flows. The rigid outer cylinder is not deformed by the resin pressure, and by using the highly rigid roll, high film thickness precision is provided over the entire surface of the film.
The cooling roll surface may be used as it is without being processed or may be coated by means of metal spraying or plating. The metal which is used for spraying or plating is not limited, and a material made of aluminum, titanium, chromium, tungsten carbide, cobalt, nickel, or the like is used. For surface processing of the roll, a known processing method, such as grinder polishing and vertical polishing, can be adopted. However, in order to satisfy the requirements of the present invention, it is needed to appropriately roughen the surface, and therefore, non-processing or grinder polishing is desired.
A surface roughness of the roll as measured with a contact-type roughness meter is 0.05 to 1.5 $\mu$m, preferably 0.1 to 1.0 $\mu$m, more preferably 0.1 to 0.7 $\mu$m, and still more preferably 0.15 to 0.4 $\mu$m in terms of Rz. When the surface roughness is less than 0.05 $\mu$m in terms of Rz, the close contact between the film and the roll becomes excessive, and the additive that is an organic compound, such as an ultraviolet absorber, attached onto the roll surface is transferred onto the film surface, resulting in causing whitening as mentioned later. On the other hand, when the surface roughness is more than 1.5 $\mu$m in terms of Rz, smoothness of the film surface is not provided, and a haze becomes high. As a result, when the roughness of the cooling roll surface is smaller than 0.05 $\mu$m or larger than 1.5 $\mu$m in terms of Rz, the appearance failure after printing is more likely generated.
The surface roughness (Rz) as referred to herein means a ten-point average roughness in conformity with JIS B0031 (1994). Regarding the ten-point average roughness, only a reference length is picked from a roughness curve as measured with a roughness meter in a direction of an average line; heights of a highest peak to a fifth highest peak are measured in a direction of longitudinal magnification from the average line of the picked part; depths of a lowest valley to a fifth lowest valley are measured in the direction of longitudinal magnification from the average line of the picked part; an average of absolute values of the heights of the peaks and an average of absolute values of the depths of the valleys are added together; and the resulting value is expressed in terms of micrometer.

Although the material to be used for the roll is not restricted, a material hardness is preferably 10 or more in terms of a Shore hardness HS, and more preferably 20 or more in terms of a Shore hardness HS. When the hardness of the base material falls within the foregoing range, push-in resistance after spraying or plating is enhanced, and risk of damaging of the roll owing to a foreign matter or the like becomes small.

It is desired that the roll has a shape in which a taper is given by taking into account the thickness of the film end. As for the taper, a taper ratio resulting from dividing [(outer diameter a of roll center) - (outer diameter b of roll end)] by a length L of the taper part is preferably 0.1 to 1.0%, and more preferably 0.3 to 0.8%. When the taper ratio falls within the foregoing range, an influence of the film end which has been extruded from the die and then become thick owing to neck-in is minimized, and close contact with the uniform roll is provided in the film effective width.

<Thermoplastic Resin Composition>

The thermoplastic resin film of the present invention is composed of a thermoplastic resin composition. The thermoplastic resin which is contained in the thermoplastic resin composition is not particularly restricted, and examples thereof include polycarbonate-based resins, such as bisphenol A polycarbonate; aromatic vinyl-based resins or hydrogenation products thereof, such as polystyrene, a styrene-acrylonitrile resin, a styrene-maleic anhydride resin, a styrene-maleimide resin, and a styrene-based thermoplastic elastomer; polyolefin-based resins, such as an amorphous polyolefin, a transparent polyolefin with a microcrystalline phase, and an ethylene-methyl methacrylate resin; (meth)acrylic resins, such as polymethyl methacrylate and a styrene-methyl methacrylate resin; polyester-based resins, such as polyethylene terephthalate, polyethylene terephthalate partially modified with cyclohexane dimethanol, isophthalic acid, or the like, polyethylene naphthalate, and a polyarylate; polyamide-based resins; polyimide-based resins; polyether sulfone-based resins; cellulose-based resins, such as a triacetyl cellulose resin; and polyphenylene oxide-based resins. These resins may be used alone or may be used in combination of two or more thereof.

The (meth)acrylic resin as referred to in this specification refers to a methacrylic resin and/or an acrylic resin. In addition, the resin film composed of a resin composition containing a (meth)acrylic resin is sometimes referred to as an "acrylic resin film". The (meth)acrylic resin may also be a heat-resistant (meth)acrylic resin modified by means of imide cyclization, lactone cyclization, methacrylic acid modification, or the like.

The thermoplastic resin may contain a thermosetting resin, for example, a phenol-based resin, a urea-based resin, a melamine-based resin, an epoxy-based resin, a silicon-based resin, and a polyurethane-based resin. These resins may be used alone or may be used in combination of two or more thereof.

In the case where the thermoplastic resin composition contains a thermosetting resin, the content of the thermosetting resin is preferably 30% by mass or less, more preferably 20% by mass or less, and still more preferably 10% by mass or less relative to the whole amount of the thermoplastic resin composition.

A glass transition temperature of the resin constituting the resin film is 90°C or higher, preferably 100°C or higher, and more preferably 110°C or higher. In addition, though an upper limit thereof is not particularly restricted, from the viewpoint of further reducing chips, it is preferably 180°C or lower, more preferably 170°C or lower, and still more preferably 150°C or lower.

From the standpoint of transparency and moldability, the thermoplastic resin is preferably a (meth)acrylic resin, and from the standpoint of impact resistance, it is more preferably at least one selected from the group consisting of a rigid methacrylic resin and an elastomer.

In the case where a rigid methacrylic resin and an elastomer are used as the thermoplastic resin, other thermoplastic resin than the rigid methacrylic resin and the elastomer may be used in combination. In this case, the content of the rigid methacrylic resin and the elastomer contained in the thermoplastic resin is preferably 80% by mass or more, more preferably 90% by mass or more, and still more preferably 95% by mass or more relative to the whole amount of the thermoplastic resin.

A proportion of the structural unit derived from methyl methacrylate in the rigid methacrylic resin is preferably 80% by mass or more, more preferably 90% by mass or more, still more preferably 95% by mass or more, yet still more preferably 99% by mass or more, and especially preferably 100% by mass. Namely, a proportion of the structural unit derived from other monomer than the methyl methacrylate is preferably 20% by mass or less, more preferably 10% by mass or less, still more preferably 5% by mass or less, yet still more preferably 1% by mass or less, and especially preferably 0% by mass.

Examples of such other monomer than the methyl methacrylate include acrylic acid esters, such as methyl acrylate, ethyl acrylate, n-propyl acrylate, isopropyl acrylate, n-butyl acrylate, isobutyl acrylate, sec-butyl acrylate, tert-butyl acrylate, amyl acrylate, isoamyl acrylate, n-hexyl acrylate, 2-ethylhexyl acrylate, pentadecyl acrylate, dodecyl acrylate, phenyl acrylate, benzyl acrylate, phenoxyethyl acrylate, 2-hydroxyethyl acrylate, 2-ethoxyethyl acrylate, glycidyl acrylate, allyl acrylate, cyclohexyl acrylate, norbornyl acrylate, and isobornyl acrylate; methacrylic acid esters other than methyl methacrylate, such as ethyl methacrylate, n-propyl methacrylate, isopropyl methacrylate, n-butyl methacrylate, isobutyl methacrylate, sec-butyl methacrylate, tert-butyl methacrylate, amyl methacrylate, isoamyl methacrylate, n-hexyl methacrylate, 2-ethylhexyl methacrylate, pentadecyl methacrylate, dodecyl methacrylate, phenyl methacrylate, benzyl methacrylate, phenoxyethyl methacrylate, 2-hydrxoyethyl methacrylate, 2-ethoxyethyl methacrylate, glycidyl methacrylate, allyl methacrylate, cyclohexyl methacrylate, norbornyl methacrylate, and isobornyl methacrylate; unsaturated carboxylic acids, such as acrylic acid, methacrylic acid, maleic anhydride, maleic acid, and itaconic acid; olefins, such as ethene, propylene, 1-butene, isobutene, and 1-octene; conjugated dienes, such as butadiene, isoprene, and myrcene; aromatic vinyl compounds, such as styrene, $\alpha$-methylstyrene, p-methylstyrene, and m-methylstyrene; acrylamide, methacrylamide, acrylonitrile, methacrylonitrile, vinyl acetate, vinylpyridine, vinylketone, vinyl chloride, vinylidene chloride, and vinylidene fluoride. These monomers may be used alone or may be used in combination of two or more thereof.

A production method of the rigid methacrylic resin is not particularly limited, and the rigid methacrylic resin is obtained by polymerizing one or plural monomers preferably containing 80% by mass or more of methyl methacrylate under an appropriate condition.

Examples of the elastomer include (meth)acrylic elastomers; silicone-based elastomers; styrene-based thermoplastic elastomers, such as SEPS, SEBS, and SIS; and olefin-based elastomers, such as IR, EPR, and EPDM. Of these, (meth)acrylic elastomers are preferred from the viewpoint of transparency or toughness.

The kind of the (meth)acrylic elastomer is not particularly restricted, and examples thereof include acrylic elastic polymers containing, as a main component, a structural unit derived from an acrylic acid acyclic alkyl ester. In the acrylic elastic polymer, the content of the structural unit derived from the acrylic acid acyclic alkyl ester is preferably 50 to 100% by mass, and more preferably 70 to 99.8% by mass. The acyclic alkyl group in the acrylic acid acyclic alkyl ester is preferably one having 4 to 8 carbon atoms, and specifically, examples thereof include a n-butyl group, a n-pentyl group, a n-hexyl group, a n-heptyl group, and a n-octyl group, and isomer groups thereof. In addition, the acrylic elastic polymer may contain a structural unit derived from other monomer than the acrylic acid acyclic alkyl ester. Examples of such a monomer include methacrylic acid alkyl esters, such as methyl methacrylate and ethyl methacrylate; styrene-based monomers, such as styrene and an alkylstyrene; unsaturated nitriles, such as acrylonitrile and methacrylonitrile; 2-chloroethylvinyl ether; and alkylene glycol (meth)acrylates, such as (meth)acrylic acid ethylene glycol, ethoxy-diethylene glycol acrylate, methoxy-triethylene glycol acrylate, 2-ethylhexyl-diglycol acrylate, methoxy-polyethylene glycol acrylate, methoxydipropylene glycol acrylate, phenoxydiethylene glycol acrylate, phenoxy-polyethylene glycol acrylate, and nonylphenol ethylene oxide adduct acrylate.

The acrylic elastic polymer may also be one having the structural unit derived from the acrylic acid acyclic alkyl ester and a structural unit derived from a crosslinkable monomer at random. Examples of the crosslinkable monomer include allyl (meth)acrylate, methallyl (meth)acrylate, diallyl maleate, triethylene glycol diacrylate, polyethylene glycol diacrylate, 1,6-hexanediol diacrylate, 1,9-nonanediol diacrylate, trimethylolpropane triacrylate, pentaerythritol triacrylate, pentaerythritol tetraacrylate, and dipentaerythritol hexaacrylate. From the viewpoint of toughness, a content ratio of the structural unit derived from the crosslinkable monomer in the acrylic elastic polymer is preferably 0.2 to 30% by mass.

In view of the fact that the effects of the present invention are more conspicuously brought, or the like, the (meth)acrylic elastomer is preferably at least one selected from the group consisting of a (meth)acrylic elastic body particle (A) and a (meth)acrylic block copolymer (B) having an acrylic acid ester polymer block (b1) and a methacrylic acid ester polymer block (b2) bonded to each other.

The (meth)acrylic elastic body particle (A) may be a particle composed of a single polymer or may be a particle in which polymers having a different elastic modulus from each other form at least two layers. The (meth)acrylic elastic body particle (A) is preferably a core-shell particle having a multilayer structure composed of a layer containing the aforementioned acrylic elastic body polymer (polymer containing, as a main component, the structural unit derived from an acrylic acid acyclic alkyl ester) and a layer containing other polymer; more preferably a core-shell particle having a two-layer structure composed of a layer containing an acrylic elastic polymer and a layer covering the outside thereof and containing a methacrylic polymer, or a core-shell particle having a three-layer structure composed of a layer containing a methacrylic elastic polymer, a layer covering the outside thereof and containing an acrylic elastic polymer, and a layer further covering the outside thereof and containing a methacrylic polymer; and still more preferably a core-shell particle having a three-layer structure.

The methacrylic polymer constituting the core-shell particle is preferably a polymer containing, as a main component, a structural unit derived from a methacrylic acid acyclic alkyl ester. In the methacrylic polymer, the content of the structural unit derived from a methacrylic acid acyclic alkyl ester is preferably 50 to 100% by mass, and more preferably 80 to 100% by mass. The methacrylic acid acyclic alkyl ester is preferably methyl methacrylate, and it is most preferred that the methacrylic polymer constituting the core-shell particle contains 80 to 100% by mass of a methyl methacrylate unit from the viewpoint of miscibility with the rigid methacrylic polymer.

From the viewpoint of transparency, toughness, and adhesive properties, a number average particle diameter of the (meth)acrylic elastic body particle (A) is preferably 50 to 500 nm, more preferably 60 to 250 nm, and still more preferably 70 to 150 nm. The number average particle diameter of the (meth)acrylic elastic body particle (A) is determined on the basis of a microscopic photograph observed by dyeing a sample obtained by melt kneading the (meth)acrylic elastic body particle (A) with the rigid methacrylic resin by using ruthenium oxide. Here, since the ruthenium oxide dyes the layer containing the acrylic elastic polymer but does not dye the layer containing the methacrylic polymer, it is estimated that the number average particle diameter of the core-shell particle having the aforementioned two-layer structure or the core-shell particle having the aforementioned three-layer structure is corresponding to a value not including a thickness of the layer containing the methacrylic polymer positioning on the outermost side.

A production method of the (meth)acrylic elastic body particle (A) is not particularly restricted, and the (meth)acrylic elastic body particle (A) can be produced by a method in conformity with a known method (see, for example, WO 2016/121868 A).

In the case where the (meth)acrylic resin is composed of the rigid methacrylic resin and the (meth)acrylic elastic body particle (A), from the viewpoint of transparency, hardness, melt viscosity, toughness, lubricity, close contact properties with a protective film, and so on, the content of the (meth)acrylic elastic body particle (A) is preferably 20 to 80 parts by mass, more preferably 50 to 75 parts by mass, and still more preferably 60 to 70 parts by mass based on 100 parts by mass of a sum total of the rigid methacrylic resin and the (meth)acrylic body elastic particle (A).

In the (meth)acrylic block copolymer (B), the bonding state between the polymer block (b1) and the polymer block (b2) is not particularly restricted. Examples thereof include a di-block copolymer expressed by (b1)-(b2); a tri-block copolymer expressed by (b1)-(b2)-(b1) or (b2)-(b1)-(b2); a multi-block copolymer expressed by (b1)-((b2)-(b1))$_n$, (b1)-((b2)-(b1))$_n$-(b2), or (b2)-((b1)-(b2))$_n$ (n is an integer); and a star block copolymer expressed by ((b1)-(b2))$_n$-X or ((b2)-(b1))$_n$-X (X is a coupling residue). From the viewpoint of productivity, a di-block copolymer expressed by (b1)-(b2) and a tri-block copolymer expressed by (b2)-(b1)-(b2) or (b1)-(b2)-(b1) are preferred; and from the viewpoint of fluidity of the resin composition during melting and surface smoothness and haze of the resin film, a tri-block copolymer expressed by (b2)-(b1)-(b2) is more preferred. In this case, the two polymer blocks (b2) bonding to the both ends of the polymer block (b1) may be the same as or different from each other independently with respect to the kind of the constituting monomer, the proportion of the structural unit derived from the methacrylic acid ester, the weight average molecular weight, and the stereoregularity. In addition, the (meth)acrylic block copolymer (B) may further contain other polymer block.

The polymer block (b1) constituting the (meth)acrylic block copolymer (B) is one composed of, as a main constitutional unit, a structural unit derived from an acrylic acid ester. A proportion of the structural unit derived from an acrylic acid ester in the polymer block (b1) is preferably 50% by mass or more, more preferably 70% by mass or more, still more preferably 90% by mass or more, and especially preferably 100% by mass.

Examples of such an acrylic acid ester include methyl acrylate, ethyl acrylate, n-propyl acrylate, isopropyl acrylate, n-butyl acrylate, isobutyl acrylate, sec-butyl acrylate, tert-butyl acrylate, amyl acrylate, isoamyl acrylate, n-hexyl acrylate, cyclohexyl acrylate, 2-ethylhexyl acrylate, pentadecyl acrylate, dodecyl acrylate, isobornyl acrylate, phenyl acrylate, benzyl acrylate, phenoxyethyl acrylate, 2-hydroxyethyl acrylate, 2-methoxyethyl acrylate, glycidyl acrylate, and allyl acrylate. By polymerizing one kind alone or a combination of two or more kinds of these acrylic acid esters, the polymer block (b1) can be formed. Above all, from the viewpoint of economy and impact resistance, the polymer block (b1) is preferably one resulting from polymerization of n-butyl acrylate alone.

The polymer block (b1) may contain a structural unit derived from other monomer than the acrylic acid ester. A proportion thereof is preferably 50% by mass or less, more preferably 30% by mass or less, still more preferably 10% by mass or less, and especially preferably 0% by mass.

Examples of such other monomer than the acrylic acid ester include a methacrylic acid ester, an unsaturated carboxylic acid, an aromatic vinyl compound, an olefin, a conjugated diene, acrylonitrile, methacrylonitrile, acrylamide, methacrylamide, vinyl acetate, vinylpyridine, vinylketone, vinyl chloride, vinylidene chloride, and vinylidene fluoride. By copolymerizing one kind alone or a combination of two or more kinds of these other monomers than the acrylic acid ester with the aforementioned acrylic acid ester, the polymer block (b1) can be formed.

The polymer block (b2) constituting the (meth)acrylic block copolymer (B) is one composed of, as a main constitutional unit, a structural unit derived from a methacrylic acid ester. A proportion of the structural unit derived from a methacrylic acid ester in the polymer block (b2) is preferably 80% by mass or more, more preferably 90% by mass or more, still more preferably 95% by mass or more, and especially preferably 100% by mass.

Examples of such a methacrylic acid ester include methyl methacrylate, ethyl methacrylate, n-propyl methacrylate, isopropyl methacrylate, n-butyl methacrylate, isobutyl methacrylate, sec-butyl methacrylate, tert-butyl methacrylate, amyl methacrylate, isoamyl methacrylate, n-hexyl methacrylate, cyclohexyl methacrylate, 2-ethylhexyl methacrylate, pentadecyl methacrylate, dodecyl methacrylate, isobornyl methacrylate, phenyl methacrylate, benzyl methacrylate, phenoxyethyl methacrylate, 2-hydroxyethyl methacrylate, 2-methoxyethyl methacrylate, glycidyl methacrylate, and allyl methacrylate. Of these, from the viewpoint of transparency and heat resistance, methacrylic acid alkyl esters, such as methyl methacrylate, ethyl methacrylate, isopropyl methacrylate, n-butyl methacrylate, tert-butyl methacrylate, cyclohexyl methacrylate, and isobornyl methacrylate, are preferred, with methyl methacrylate being more preferred. By polymerizing one kind alone or a combination of two or more kinds of these methacrylic acid esters, the polymer block (b2) can be formed.

The polymer block (b2) may contain a structural unit derived from other monomer than the methacrylic acid ester. A proportion thereof is preferably 20% by mass or less, more preferably 10% by mass or less, still more preferably 5% by mass or less, and especially preferably 0% by mass.

Examples of such other monomer than the methacrylic acid ester include an acrylic acid ester, an unsaturated carboxylic acid, an aromatic vinyl compound, an olefin, a conjugated diene, acrylonitrile, methacrylonitrile, acrylamide, methacrylamide, vinyl acetate, vinylpyridine, vinylketone, vinyl chloride, vinylidene chloride, and vinylidene fluoride. By copolymerizing one kind alone or a combination of two or more kinds of these other monomers than the methacrylic acid ester with the aforementioned methacrylic acid ester, the polymer block (b2) can be formed.

From the viewpoint of transparency, surface hardness, molding processability, surface smoothness, and impact resistance, a proportion of the polymer block (b2) in the (meth)acrylic block copolymer (B) is preferably 40% by mass or more, more preferably 43% by mass or more, and still more preferably 47% by mass or more based on 100% by mass of a sum total of the polymer block (b1) and the polymer block (b2). The foregoing proportion is preferably 70% by mass or less, more preferably 65% by mass or less, and still more preferably 60% by mass or less.

A production method of the (meth)acrylic block copolymer (B) is not particularly limited, and a method in conformity with a known method (see, for example, WO 2016/121868 A) can be adopted. For example, a method of performing living polymerization of monomers constituting the respective polymer blocks is generally adopted. Examples thereof include a method of performing anionic polymerization using an organic alkali metal compound as a polymerization initiator in the presence of a mineral acid salt, such as an alkali metal salt and an alkaline earth metal salt; a method of performing anionic polymerization using an organic alkali metal compound as a polymerization initiator in the presence of an organoaluminum compound; a method of performing polymerization using an organic rare earth metal complex as a polymerization initiator; and a method of performing radical polymerization using an $\alpha$-halogenated ester compound as an initiator in the presence of a copper compound. In addition, examples thereof include a method in which monomers constituting the respective blocks are polymerized using a polyvalent radical polymerization initiator or a polyvalent radical chain transfer agent, to produce a mixture containing the (meth)acrylic block copolymer (B).

In the case where the (meth)acrylic resin is composed of the rigid methacrylic resin and the (meth)acrylic block copolymer (B), from the viewpoint of surface hardness and impact resistance, the content of the (meth)acrylic block copolymer (B) is preferably 1 to 35 parts by mass, more preferably 8 to 25 parts by mass, and still more preferably 12 to 21 parts by mass based on 100 parts by mass of a sum total of the rigid methacrylic resin and the (meth)acrylic block copolymer (B).

The thermoplastic resin composition which forms the resin film contains the additive that is an organic compound in an amount of 0.5 to 5 parts by mass based on 100 parts by mass of the thermoplastic resin. When the content of the additive that is an organic compound is less than 0.5 parts by mass, there is a concern that the effect to be brought owing to the additive is not sufficiently exhibited, whereas when it is more than 5 parts by mass, there is a concern that the resin film is whitened. From such a viewpoint, the content of the additive that is an organic compound is preferably 1 to 4.5 parts by mass, more preferably 1.5 to 4 parts by mass, still more preferably 2 to 4 parts by mass, and yet still more preferably 2.5 to 3.5 parts by mass based on 100 parts by mass of the thermoplastic resin.

Examples of the additive include a polymer processing aid, a light stabilizer, an ultraviolet absorber, an antioxidant, a heat stabilizer, a lubricant, an antistatic agent, a pigment, a dye, a filler, and an impact resistance aid. Although the aforementioned thermoplastic resin composition contains an additive that is the organic compound among the aforementioned additives, it may also contain an additive that is an inorganic compound, as the need arises within a range where the effects of the present invention are not impaired.

The additive may be used alone or may be used in combination of two or more thereof in an arbitrary ratio. From the viewpoint of mechanical properties and surface hardness of the resin film, it is preferred that the thermoplastic resin composition does not contain a large amount of a foaming agent, a filler, a matting agent, a light diffusing agents, a softening agent, or a plasticizer.

The additive that is an organic compound is attached onto the cooling roll surface during film molding, and this is further transferred onto the film surface, resulting in causing whitening of the film. The amount of the additive that is an organic compound, as transferred and attached onto the film surface, is 0.02% by mass or less, and preferably 0.015% by mass or less relative to the film.

Immediately after molding of a film (film formation), the additive is not attached onto the cooling roll surface, and therefore, whitening of the film is hardly generated. However, according to the production method of a film of the present invention, even after elapse of time of preferably 2 hours, more preferably 4 hours, and more preferably 6 hours after commencement of the film formation, in the resulting film, the amount of the additive that is an organic compound, as attached onto the film surface, can be controlled to the aforementioned upper limit value or less.

The amount of the additive that is an organic compound, as attached onto the film surface, can be measured by a method described in the section of Examples.

Among the aforementioned additives, an ultraviolet absorber is preferably used.

The ultraviolet absorber is a compound having an ability of absorbing ultraviolet rays by mainly converting light energy to heat energy. Examples thereof include a benzophenone, a benzotriazole, a triazine, a benzoate, a salicylate, a cyanoacrylate, an oxalic anilide, a malonic acid ester, and a formamidine.

Above all, from the viewpoint of suppressing a lowering of optical characteristics of the thermoplastic resin film, such as coloration to be caused owing to exposure with ultraviolet rays, a benzotriazole and a triazine are preferred, and a benzotriazole is more preferred. In addition, an oxalic anilide is preferred from the viewpoint of suppressing yellowing of the thermoplastic resin film.

Preferred examples of the benzotriazole include 2,2'-methylenebis[6-(2H-benzotriazol-2-yl)-4-(1,1,3,3-tetramethylbutyl)phenol] (manufactured by Adeka Corporation; a trade name: ADEKA STUB LA-31), (manufactured by Johoku Chemical Co., Ltd.; a trade name: UVA1), 2-(2H-benzotriazol-2-yl)-4-(1,1,3,3-tetramethylbutyl)phenol (manufactured by Ciba Specialty Chemicals Inc.; a trade name: TINUVIN 329), and 2-(2H-benzotriazol-2-yl)-4,6-bis(1-methyl-1-phenylethyl)phenol (manufactured by Ciba Specialty Chemicals Inc.; a trade name: TINUVIN 234).

Examples of the triazine include 2,4-bis(2-hydroxy-4-butyloxyphenyl)-6-(2,4-butyloxyphenyl)-1,3,5-triazine (manufactured by BASF SE; a trade name: TINUVIN 460), 2-(4-[[(2-hydroxy-3-(2-ethyl)hexyl)oxy]-2-hydroxyphenyl)-4,6-bis(2,4-dimethylp henyl)-1,3,5-triazine (manufactured by BASF SE; a trade name: TINUVIN 405), TINUVIN 479, manufactured by BASF SE, TINUVIN 1477, manufactured by BASF SE, 2-(4,6-diphenyl-1,3,5-triazin-2-yl)-5-[2-(2-ethylhexanoyloxy)ethoxy]phenol (manufactured by Adeka Corporation; a trade name: ADEKA STUB LA-46), and 2,4,6-tris(2-hydroxy-4-hexyloxy-3-methylphenyl)-1,3,5-triazine (manufactured by Adeka Corporation; a trade name: ADEKA STUB LA-F70).

As the oxalic anilide, ones in which a maximum value $\varepsilon_{MAX}$ of molar absorption coefficient at a wavelength of 380 to 450 nm is 1,200 $dm^3 \cdot mol^{-1} cm^{-1}$ or less are preferred, and 2-ethyl-2'-ethoxy-oxalanilide (manufactured by Clariant Japan K.K.; a trade name: SANDUVOR VSU) and the like are more preferred.

Such an additive may be added to the polymerization reaction liquid on the occasion of producing a thermoplastic resin or may be added to a thermoplastic resin produced through the polymerization reaction.

The content of the thermoplastic resin and the additive is 70% by mass or more, preferably 80% by mass or more, and more preferably 90% by mass or more relative to the whole amount of the thermoplastic resin composition, and it may also be 100% by mass.

<Film>

The thermoplastic resin film of the present invention is a single-layer film including a thermoplastic resin composition containing 100 parts by mass of the thermoplastic resin and 0.5 to 5 parts by mass of the addition that is an organic compound.

A thickness of the resin film of the present invention is preferably 20 to 300 $\mu$m, more preferably 25 to 125 $\mu$m, still more preferably 30 to 75 $\mu$m, and yet still more preferably 40 to 60 $\mu$m. When the thickness of the resin film is 20 $\mu$m or more, the effect for weather resistance is enhanced, whereas when the thickness of the resin film is 300 $\mu$m or less, the handling properties as a film having a roll shape become favorable.

A haze of the resin film of the present invention is 2% or less, preferably 1.7% or less, more preferably 1.5% or less, and still more preferably 1.0% or less. When the haze is more than 2%, the performance as a transparent film is lowered.

The haze can be measured in conformity with JIS K7136 (2000), and specifically, it can be measured by a method described in the section of Examples.

<Application>

The resin film of the present invention is not particularly restricted with respect to an application. Examples thereof include vehicle decorative parts, such as a vehicle exterior part and a vehicle interior part; construction material parts, such as a wall material, a window film, and a wall material for bathroom; daily goods, such as tableware and a toy; appliances decorative parts, such as a vacuum cleaner housing, a television housing, and an air conditioner housings; interior components, such as surface materials for kitchen doors; ship components; electronic communication devices, such as a surface material for touch panel, a personal computer housing, and a mobile phone housing; optics-related parts, such as a protective plate for liquid crystal, a light guide plate, a light guide film, a protective films for polarizer, a protective film for polarizing plate, a retardation film, front plates and surface materials for various displays, and a light dispersing plate; and components for photovoltaic power generation, such as a surface material for solar cell or photovoltaic power generation panel.

Above all, the film of the present invention can be suitably used for decorative application. The decorating method is not particularly limited. Examples thereof include a method in which the resin film of the present invention is subjected to printing or vapor deposition as it is or on at least one surface, followed by lamination on the surface of an article to be decorated (lamination molding method); a method in which the resin film of the present invention is subjected to vacuum or pressure molding in commensurate with the shape of an article to be decorated, and this is placed in a mold for injection molding and subsequently subjected to injection molding, thereby undergoing sticking simultaneously with the injection molding (insert molding method); a method in which the acrylic resin film of the present invention is subjected to vacuum or pressure molding within a mold cavity for injection molding and subsequently subjected to injection molding, thereby undergoing sticking simultaneously with the injection molding (in-mold molding method); and a method in which the acrylic resin film of the present invention is brought along the surface of an article to be decorated in a vacuum state within a mold cavity, followed by performing pressure/press molding (vacuum/pressure molding method, TOM molding method).

Examples

The present invention is hereunder specifically described by reference to Examples and Comparative Examples, but it should be construed that the present invention is by no means limited thereto. The measurements or evaluations of physical properties in the Examples and Comparative Examples were performed by the following methods.

[Measurement of Amount of Additive (Ultraviolet Absorber) of Film Surface]

A test piece of 50 mm × 50 mm was cut out from the thermoplastic resin film (4 hours after commencement of film formation) obtained in each of the Examples. The cut-out test piece was dipped in ethanol for 5 seconds and then taken out, and the amount of an ultraviolet absorber contained in the ethanol from which the test piece had been taken out was quantitatively determined by means of liquid chromatography. With respect to the quantitative determination method, 0.00525% of the standard liquid was analyzed, and a factor was determined from an area thereof and expressed in terms of a weight from each sample concentration. For the liquid chromatography, a detector (L-7400, manufactured by Hitachi High-Tech Fielding Corporation), a pump (LC-9A, manufactured by Shimadzu Corporation), and a thermostat (CTO-20AC, manufactured by Shimadzu Corporation) were used.

The resulting amount of the ultraviolet absorber was determined as a proportion on the basis of the mass of the test piece.

[Haze]

A test piece of 50 mm × 50 mm was cut out from the thermoplastic resin film (4 hours after commencement of film formation) obtained in each of the Examples and measured at 23°C for the haze by using a haze meter (Haze Meter HM-150, manufactured by Murakami Color Research Laboratory Co., Ltd.) in conformity with JIS K7136 (2000).

[Surface Roughness (Rz) of Metal Cooling Roll]

With respect to the surface roughness (Rz) of a metal cooling roll (metal rigid roll), a ten-point average roughness at three points in the roll width direction in a reference length of 4 mm was measured with a contact-type roughness meter (SURFCOM 130A, manufactured by Tokyo Seimitsu Co., Ltd.) in conformity with JIS B0031 (1994), and an average value thereof was used.

[Solvent Resistance]

A test piece of 100 mm × 100 mm was cut out from the thermoplastic resin film (4 hours after commencement of film formation) obtained in each of the Examples; two drops of ethanol were dropped on the center of the test piece from a dropping pipette (Falcon Transfer Pipet 3mL, manufactured by Corning Incorporated); and after drying in an oven at 80°C for 12 hours, the surface of the test piece was observed and evaluated as follows. When the test piece is rated as "A" or "B" according to the following evaluation criteria, the thermoplastic resin film can be provided for practical use.

A: No whitening is observed.
B: Whitening is slightly observed.
C: Whitening is observed.

[Winding Appearance of Film Roll]

The film roll of the thermoplastic resin film obtained in each of the Examples was observed with respect to the presence or absence of winding deviation or winding wrinkle and evaluated as follows. When the film roll is rated as "A" or "B" according to the following evaluation criteria, the thermoplastic resin film can be provided for practical use.

A: Neither winding deviation nor winding wrinkle is observed.
B: Winding deviation or winding wrinkle is slightly observed.
C: Winding deviation or winding wrinkle is observed.

[Weather Resistance]

A test piece of 50 mm × 50 mm was cut out from the thermoplastic resin film (4 hours after commencement of film formation) obtained in each of the Examples; a 3 mm-thick injection molded sheet made of an acrylic resin (HR1000, manufactured by Kuraray Co., Ltd.) was superimposed thereon; and an end of the resultant was immobilized with an adhesive tape, to obtain a laminated plate. Values of L, a, and b in the Lab color space of the surface on the test piece side of the laminated plate were measured, respectively by using an SM color computer (M-4, manufactured by Suga Test Instruments Co., Ltd.).

Subsequently, the surface on the test piece of the foregoing laminated plate was irradiated with ultraviolet rays for 300 hours by using a super UV tester (SUV-W161, manufactured by Iwasaki Electric Co., Ltd.) under a condition at a black panel temperature of 83°C and a relative humidity of 50%, and at an irradiation energy of 100 mW/cm$^2$. Thereafter, the laminated plate was taken out from the tester, and values of L, a, and b of the surface on the test piece side of the laminated plate were measured, respectively in the same method as mentioned above.

A difference of each of the values of L, a, and b ($\Delta L$, $\Delta a$, and $\Delta b$) before and after the irradiation with ultraviolet rays was determined, a color difference ($\Delta E$) was determined according to the following expression, and the evaluation was made as follows. When the test piece is rated as "A" or "B" according to the following evaluation criteria, the thermoplastic resin film can be provided for practical use.

$$\Delta E = [(\Delta L)^2 + (\Delta a)^2 + (\Delta b)^2]^{1/2}$$

A: The color difference ($\Delta E$) is 6.5 or less.
B: The color difference ($\Delta E$) is more than 6.5 and less than 10.
C: The color difference ($\Delta E$) is 10 or more.

[Film Appearance]

A test piece of 50 mm × 50 mm was cut out from the thermoplastic resin film (4 hours after commencement of film formation) obtained in each of the Examples and measured at 23°C for the haze by using a haze meter (Haze Meter HM-150, manufactured by Murakami Color Research Laboratory Co., Ltd.) in conformity with JIS K7136 (2000), and the evaluation was made as follows. When the test piece is rated as "A" according to the following evaluation criteria, the thermoplastic resin film can be provided for practical use.

A: The haze is 2.0% or less.
B: The haze is more than 2.0 and less than 5.0%.
C: The haze is 5.0% or more.

The following ultraviolet absorber was prepared.
UVA1: JF-832 (trade name), manufactured by Johoku Chemical Co., Ltd; 2,2'-methylenebis[6-(2H-benzotriazol-2-yl)-4-tert-octylphenol]

<Example 1>

A thermoplastic resin containing a rigid methacrylic resin and a (meth)acrylic elastic body particle was prepared by reference to Production Example 1 of WO 2017/141873 A. 100 parts by mass of the obtained thermoplastic resin and 3 parts by mass of the ultraviolet absorber (UVA1) that is an organic compound were melt kneaded using a twin-screw extruder with a vent having a screw diameter of 75 mm as set at 260°C, thereby obtaining a pellet of a thermoplastic resin composition.

This pellet was melted using a single-screw extruder with a vent having a screw diameter of 75 mm as set at 260°C. The thermoplastic resin composition which was discharged in a molten state from the extruder was passed successively through a gear pump and a static mixer, and then extruded in a film-like state at a discharge rate of 150 kg/h from a T-die having a lip width of 1,850 mm and a lip opening of 0.4 mm. The extruded thermoplastic resin in a film-like state was pinched and cooled by a metal elastic roll and a metal rigid roll having a surface roughness (Rz) of 0.2 $\mu$m, thereby obtaining a thermoplastic resin film (acrylic resin film) having a thickness of 55 $\mu$m. The foregoing acrylic resin film was wound up in a roll form by a winder, thereby obtaining a film roll. As for the obtained acrylic resin film, the additive amount of the film surface was 0.015% by mass, and the haze was 1.2%. The evaluation results are shown in Table 1.

<Example 2>

An acrylic resin film and a film roll were obtained in the same manner as in Example 1, except for changing the surface roughness (Rz) of the metal rigid roll to 1.0 $\mu$m. As for the obtained acrylic resin film, the additive amount of the film surface was 0.009% by mass, and the haze was 2.0%. The evaluation results are shown in Table 1.

<Example 3>

An acrylic resin film and a film roll were obtained in the same manner as in Example 1, except for changing the surface roughness (Rz) of the metal rigid roll to 0.1 $\mu$m. As for the obtained acrylic resin film, the additive amount of the film surface was 0.018% by mass, and the haze was 0.4%. The evaluation results are shown in Table 1.

<Example 4>

An acrylic resin film and a film roll were obtained in the same manner as in Example 1, except for changing the addition amount of the ultraviolet absorber to 1.5 parts by mass. As for the obtained acrylic resin film, the additive amount of the film surface was 0.008% by mass, and the haze was 1.4%. The evaluation results are shown in Table 1.

<Comparative Example 1>

An acrylic resin film and a film roll were obtained in the same manner as in Example 1, except for changing the surface roughness (Rz) of the metal rigid roll to 0.03 $\mu$m. As for the obtained acrylic resin film, the additive amount of the film surface was 0.030% by mass, and the haze was 0.5%. The evaluation results are shown in Table 1.

<Comparative Example 2>

An acrylic resin film and a film roll were obtained in the same manner as in Example 1, except for changing the addition amount of the ultraviolet absorber to 1.5 parts by mass and changing the surface roughness (Rz) of the metal rigid roll to 0.03 $\mu$m. As for the obtained acrylic resin film, the additive amount of the film surface was 0.023% by mass, and the haze was 0.2%. The evaluation results are shown in Table 1.

<Comparative Example 3>

An acrylic resin film and a film roll were obtained in the same manner as in Example 1, except for changing the surface roughness (Rz) of the metal rigid roll to 2.0 $\mu$m. As for the obtained acrylic resin film, the additive amount of the film surface was 0.005% by mass, and the haze was 9.0%. The evaluation results are shown in Table 1.

<Comparative Example 4>

An acrylic resin film and a film roll were obtained in the same manner as in Example 1, except for changing the addition amount of the ultraviolet absorber to 0.3 parts by mass. As for the obtained acrylic resin film, the additive amount of the film surface was 0.002% by mass, and the haze was 1.1%. The evaluation results are shown in Table 1.

<Comparative Example 5>

An acrylic resin film and a film roll were obtained in the same manner as in Example 1, except for changing the addition amount of the ultraviolet absorber to 7.0 parts by mass. As for the obtained acrylic resin film, the additive amount of the film surface was 0.040% by mass, and the haze was 1.4%. The evaluation results are shown in Table 1.

Table 1

| | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|
| Additive amount of film surface (% by mass) | 0.015 | 0.009 | 0.018 | 0.008 | 0.030 | 0.023 | 0.005 | 0.002 | 0.040 |
| Haze (%) | 1.2 | 2.0 | 0.4 | 1.4 | 0.5 | 0.2 | 9.0 | 1.1 | 1.4 |
| Addition amount of additive (ultraviolet absorber) (parts by mass) | 3.0 | 3.0 | 3.0 | 1.5 | 3.0 | 1.5 | 3.0 | 0.3 | 7.0 |
| Surface roughness of metal cooling roll Rz ($\mu$m) | 0.2 | 1.0 | 0.1 | 0.2 | 0.03 | 0.03 | 2.0 | 0.2 | 0.2 |
| $\Delta E$ | 2 | 2 | 3 | 8 | 2 | 7 | 3 | 11 | 1 |
| Solvent resistance | A | A | B | A | C | C | A | A | C |
| Winding appearance of film roll | A | A | B | A | C | C | A | A | A |
| Weather resistance | A | A | A | B | A | B | A | C | A |
| Film appearance | A | A | A | A | A | A | C | A | A |

The films obtained in Examples 1 to 4 each include a thermoplastic resin composition containing 100 parts by mass of the thermoplastic resin and 0.5 to 5 parts by mass of the additive that is an organic compound, wherein a haze thereof is 2% or less, and the amount of the additive that is an organic compound attached onto the film surface is 0.02% by mass or less relative to the film, and therefore, they were excellent in solvent resistance, functionality, and an appearance of a film roll.

Industrial Applicability

The thermoplastic resin film of the present invention is excellent in solvent resistance and weather resistance and is able to be suitably utilized as decorative application.

Reference Signs List

1: Extruder
2: Gear pump
3: Motionless mixing device
4: Die
5: Cooling roll

**Claims**

1. A thermoplastic resin film comprising a thermoplastic resin composition containing 100 parts by mass of a thermoplastic resin and 0.5 to 5 parts by mass of an additive that is an organic compound, wherein
the content of the thermoplastic resin and the additive is 70% by mass or more relative to the whole amount of the resin composition,
a haze thereof is 2% or less, and
the amount of the additive that is an organic compound attached onto the film surface is 0.02% by mass or less relative to the film.

2. The thermoplastic resin film according to claim 1, wherein the thermoplastic resin is at least one selected from the group consisting of a rigid methacrylic resin and an elastomer.

3. The thermoplastic resin film according to claim 2, wherein the elastomer is a (meth)acrylic elastomer.

4. The thermoplastic resin film according to claim 3, wherein the (meth)acrylic elastomer is a (meth)acrylic elastic body particle.

5. The thermoplastic resin film according to any of claims 1 to 4, wherein the additive that is an organic compound is an ultraviolet absorber.

6. The thermoplastic resin film according to any of claims 1 to 5, wherein a thickness thereof is 20 to 300 $\mu$m.

7. A method for producing the thermoplastic resin film according to any of claims 1 to 6, comprising
extruding a thermoplastic resin composition in a molten state from a die; and
bringing the molten thermoplastic resin composition into contact with a metal cooling roll having a surface roughness (Rz) of 0.05 to 1.5 $\mu$m,
the thermoplastic resin composition containing 100 parts by mass of a thermoplastic resin and 0.5 to 5 parts by mass of an additive that is an organic compound, and the content of the thermoplastic resin and the additive being 70% by mass or more relative to the whole amount of the resin composition.

[Fig. 1]

## INTERNATIONAL SEARCH REPORT

| International application No. |
|---|
| PCT/JP2019/004096 |

### A. CLASSIFICATION OF SUBJECT MATTER
Int.Cl. C08J5/18(2006.01)i

According to International Patent Classification (IPC) or to both national classification and IPC

### B. FIELDS SEARCHED

Minimum documentation searched (classification system followed by classification symbols)
Int.Cl. C08J5/00-C08J5/02, C08J5/12-C08J5/22

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2010-65109 A (NIPPON SHOKUBAI CO., LTD.) 25 March 2010, claims, paragraphs [0008]-[0009], [0019]-[0020], [0062], [0064], [0073]-[0080], [0100], [0119]-[0121], [0144], [0153], [0162], [0205]-[0311], table 1 (Family: none) | 1-6<br>7 |

☒ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 16 April 2019 (16.04.2019) | 07 May 2019 (07.05.2019) |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

**INTERNATIONAL SEARCH REPORT**

International application No.

PCT/JP2019/004096

C (Continuation).    DOCUMENTS CONSIDERED TO BE RELEVANT

| Category* | Citation of document, with indication, where appropriate, of the relevant passages | Relevant to claim No. |
|---|---|---|
| X<br>Y | WO 2017/169931 A1 (ASAHI KASEI CORPORATION) 05 October 2017, claims, paragraphs [0007]-[0011], [0018], [0121]-[0138], [0150], [0156], [0164], [0171], [0189], [0197], [0209], [0211]-[0263], tables 1, 2 & EP 3438142 A1, claims, paragraphs [0012]-[0018], [0026], [0219]-[0264], [0294]-[0296], [0310]-[0311], [0327], [0336], [0378]-[0381], [0403]-[0405], [0429]-[0430], [0432]-[0599], tables 1, 2 & CN 108779213 A & KR 10-2018-0110167 A | 1-7<br>7 |
| A | WO 2017/200032 A1 (KURARAY CO., LTD.) 23 November 2017, entire text (Family: none) | 1-7 |
| A | JP 2006-342358 A (MITSUBISHI RAYON CO., LTD.) 21 December 2006, entire text & US 2006/0110617 A1, entire text & EP 1582538 A1 & CN 1732192 A | 1-7 |
| A | JP 2009-184251 A (TORAY INDUSTRIES, INC.) 20 August 2009, entire text (Family: none) | 1-7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016186086 A
- JP 2016535799 T
- WO 2016121868 A
- WO 2017141873 A